# FASCICULE DE BREVET EUROPEEN

(11) **EP 1 328 750 B1**
(45) Date de publication et mention de la délivrance du brevet: **08.09.2004**
(21) Numéro de dépôt: 01980639.7
(22) Date de dépôt: 24.10.2001
(51) Int. Cl.: F16L 37/084, F16L 35/00

(54) **DISPOSITIF DE RACCORDEMENT COMPORTANT DES MOYENS DE CONNEXION INSTANTANEE D'UNE EXTREMITE DE CONDUITE A UN ORGANE ET DES MOYENS DE PROTECTION DE LA CONNEXION**
ANSCHLUSSANORDNUNG MIT EINER SCHNELLKUPPLUNG ZUM VERBINDEN VON EINEM LEITUNGSENDE MIT EINEM ANSCHLUSSTEIL UND VORRICHTUNG ZUM SCHUTZ DER VERBINDUNG
CONNECTING DEVICE COMPRISING MEANS FOR INSTANTANEOUS CONNECTION OF A PIPE END TO A MEMBER AND MEANS FOR PROTECTING THE CONNECTION

(30) Priorité: 26.10.2000 FR 0013717; 21.02.2001 FR 0102316
(43) Date de publication de la demande: 23.07.2003
(73) Titulaire: LEGRIS S.A., F-35000 Rennes (FR)
(72) Inventeur: GUIVAR'CH, Olivier, F-LE RHEU (FR); GOILOT, Frédéric, F-35000 RENNES (FR); QUERE, Jean-Luc, F-35170 BRUZ (FR)
(74) Mandataire: Lavialle, Bruno
(86) Numéro de dépôt international: PCT/FR2001/003299
(87) Numéro de publication internationale: WO 2002/035134

(56) Documents cités:
- FR-A- 2 591 309
- FR-A- 2 790 056
- GB-A- 2 040 014
- GB-A- 2 122 714
- US-A- 4 573 716

## Description

La présente invention concerne un dispositif de raccordement comportant des moyens de connexion instantanée d'une extrémité de conduite à un organe.

Les dispositifs de connexion incorporant de tels moyens de connexion sont généralement utilisés dans les circuits de transport de fluides, notamment pour raccorder une conduite à une autre conduite, à un élément émetteur de fluides comme une pompe ou à un élément récepteur de fluides comme un réservoir.

Un dispositif de connexion de type connu comprend généralement un corps pourvu d'un canal interne débouchant dans un chambrage destiné à recevoir une extrémité de la conduite, un joint torique d'étanchéité et des moyens de retenue de cette extrémité de conduite.

Les moyens de retenue comprennent par exemple une rondelle élastiquement déformable possédant une circonférence intérieure qui a un diamètre inférieur à un diamètre extérieur de la conduite et est divisée en une pluralité de dents, et une partie extérieure qui est reçue dans une gorge ménagée dans le chambrage. Lors de l'introduction de l'extrémité de conduite, les dents sont soulevées par flexion pour laisser passer la conduite et, sous l'effet de l'élasticité du matériau constituant la rondelle, l'extrémité libre des dents est appliquée sur la surface externe de la conduite pour mordre dans celle-ci lorsqu'un effort d'extraction est exercé sur la conduite.

Le dispositif de connexion comprend généralement un moyen de déconnexion sous la forme d'un poussoir reçu à coulissement dans le chambrage et dont une extrémité est conformée pour venir s'intercaler entre les dents et la conduite et les écarter de celles-ci et une extrémité opposée de manoeuvre s'étend en saillie à l'extérieur du chambrage. Il existe un risque que des pièces environnant le dispositif de raccordement enfoncent le poussoir lors d'un déplacement relatif de celles-ci et du dispositif ou, en cas de flexion de la conduite, que la flexion de la conduite provoque l'enfoncement de celui-ci entraînant ainsi une déconnexion accidentelle de l'extrémité de conduite.

En outre, lorsqu'une conduite raccordée à un tel dispositif de connexion est soumise à un effort provoquant la flexion de l'extrémité de conduite à proximité du dispositif de connexion, la flexion tend à provoquer une déformation transversale de l'extrémité de conduite et plus précisément une ovalisation de celle-ci. Cette ovalisation dégrade la qualité du contact entre la surface externe de l'extrémité de conduite et la surface interne du joint d'étanchéité, ce qui risque de provoquer des fuites. Une déformation importante risque en outre d'occasionner un pincement de la conduite au niveau du raccord plus rigide que la conduite.

On prévoit, selon l'invention, un manchon de protection de la connexion, qui comporte de façon axialement consécutive une partie de liaison au corps qui s'étend axialement en saillie du corps autour de l'extrémité de manoeuvre du poussoir, une partie de guidage de la conduite qui est solidaire de la partie de liaison d'un côté opposé au corps et s'étend au-delà de l'extrémité de manoeuvre du poussoir coaxialement au canal interne et une partie tubulaire de soutien de la conduite prolongeant la partie de guidage à l'opposé de la partie de liaison.

Ainsi, le manchon vient entourer l'extrémité de manoeuvre du poussoir et empêche tout enfoncement accidentel de celui-ci. En outre, la partie de guidage du manchon empêche la flexion de la conduite au voisinage du corps et des moyens de connexion instantanée. De plus, la partie de guidage peut être agencée pour présenter un diamètre interne sensiblement égal au diamètre externe de l'extrémité de conduite de manière à limiter encore la possibilité d'une déformation transversale de l'extrémité de conduite. Lorsqu'un effort de flexion est exercé sur l'extrémité de conduite au-delà de la partie de guidage, la partie de soutien tend à limiter la courbure de la conduite sous cet effort. Ceci permet de limiter le risque d'un pincement de l'extrémité de conduite du fait d'une flexion trop importante de celle-ci. Les risques de déconnexion accidentels et éventuellement d'ovalisation sont de la sorte limités tout en préservant les caractéristiques d'écoulement du fluide.

Selon un mode de réalisation particulier, la partie de liaison comprend des moyens de son attelage amovible au corps.

Il est alors aisé d'accéder au corps et aux moyens de connexion instantanée par le simple retrait du manchon.

De préférence dans ce mode réalisation, les moyens d'attelage comprennent une bague montée pour coulisser transversalement dans la partie de liaison entre une position verrouillée dans laquelle la bague est rappelée élastiquement et est décentrée par rapport à l'axe de la partie de liaison pour présenter une partie en saillie dans le manchon destinée à coopérer avec un relief correspondant du corps et une position déverrouillée dans laquelle la bague est coaxiale à la partie de liaison pour dégager le relief, le rappel élastique étant avantageusement réalisé au moyen de pattes recourbées élastiquement déformables ayant une extrémité solidaire de la surface externe de la bague et une extrémité opposée libre en appui sur une paroi de la partie de liaison du manchon.

En variante, les moyens d'attelage comprennent au moins une lame élastique qui est déformable entre un premier étant dans lequel elle est rappelée élastiquement et un deuxième état, la lame élastique s'étendant longitudinalement à l'extérieur du corps et ayant une extrémité solidaire du corps et une extrémité opposée libre pourvue d'un redan pour être introduite dans le manchon et coopérer avec un perçage ménagé transversalement dans le manchon lorsque ce dernier est attelé au corps de telle manière que, la lame élastique étant dans son premier état, l'extrémité libre est écartée du corps et le redan est en saillie dans le perçage et, la lame élastique étant dans son deuxième état, l'extrémité libre est rapprochée du corps et le redan est dégagé du perçage, les moyens d'attelage comprenant de préférence deux lames élastiques s'étendant parallèlement le long du corps à l'opposé l'une de l'autre pour coopérer avec deux perçages correspondants du manchon.

Ces modes d'attelage du manchon au corps sont simples et bien adaptés aux contraintes d'utilisation des moyens de limitations de flexion, notamment en ce qui concerne la résistance de l'attelage et la facilité de manipulation.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- la figure 1 est une vue en coupe longitudinale, selon la ligne I-I de la figure 3, d'un raccord pourvu d'un manchon de protection conforme à l'invention,
- la figure 2 est une vue partielle en élévation d'un manchon de protection au moment de leur fixation sur le raccord,
- la figure 3 est une vue en élévation du raccord équipé d'un manchon de protection,
- la figure 4 a à e présente en élévation une décomposition d'une opération de raccordement avec un raccord selon une variante de réalisation de l'invention.

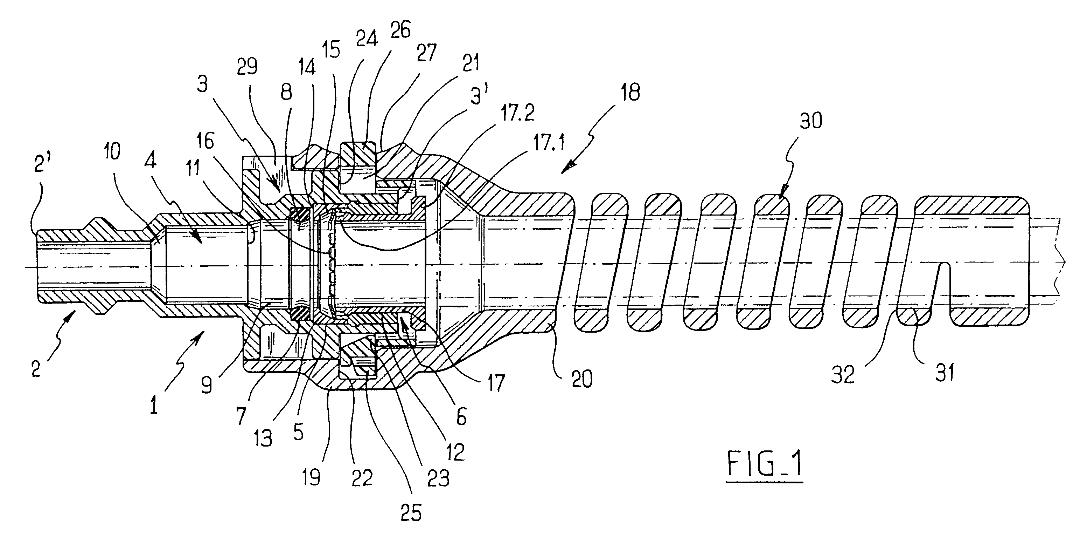

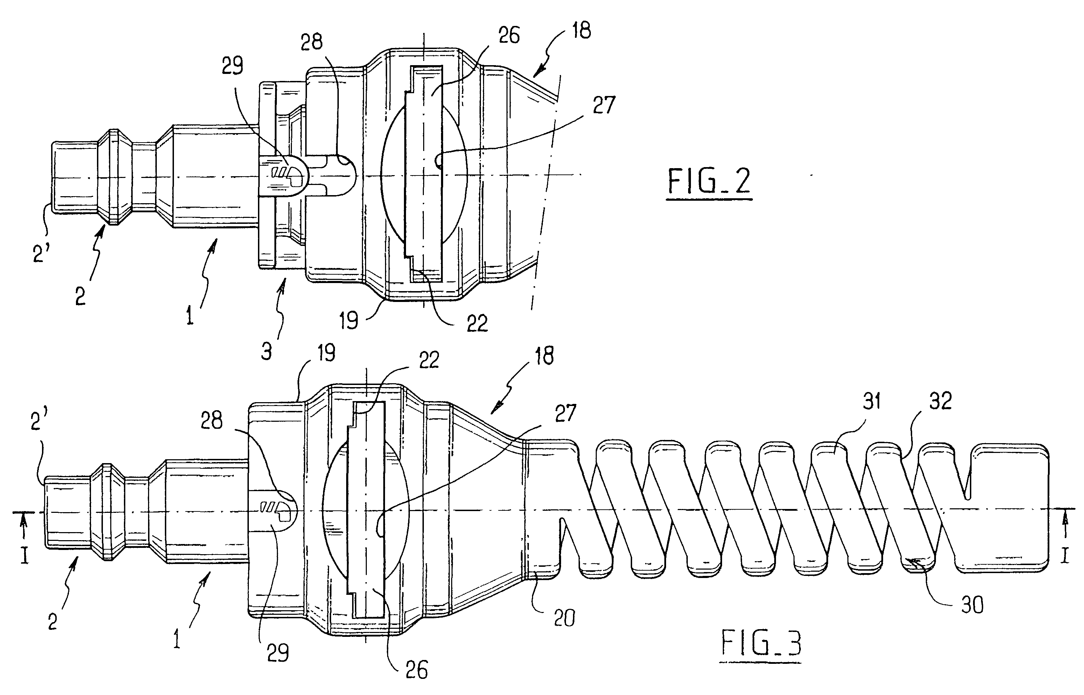

En référence aux figures 1 à 3, le dispositif de raccordement conforme à l'invention comprend un corps, généralement désigné en 1, de forme tubulaire et axialement divisé en une partie mâle généralement désignée en 2 destinée par exemple à être introduite dans un canal d'un organe émetteur ou récepteur de fluide, non représenté, et une partie femelle généralement désignée en 3 destinée à recevoir une extrémité de conduite ici représentée en traits mixtes. Le raccord pourrait également être réalisé sous la forme d'une partie femelle 3 en une seule pièce avec ledit organe.

Un alésage étagé généralement désigné en 4 s'étend axialement dans le corps 1. L'alésage étagé 4 est divisé axialement de l'extrémité libre 3' de la partie femelle 3 à l'extrémité libre 2' de la partie mâle 2 en une portion de grand diamètre 5 pour recevoir des moyens de connexion instantanée 6, une portion de diamètre inférieur 7 recevant un joint torique 8, une portion de guidage 9 ayant un diamètre sensiblement égal au diamètre externe de l'extrémité de conduite et une portion étagée 10 ayant une partie de plus petit diamètre s'étendant du côté de l'extrémité libre de la partie mâle et assurant la communication de la partie de l'alésage étagé 4 recevant l'extrémité de conduite avec le canal de l'organe raccordé à la partie mâle 2.

Entre les portions 9 et 10 de l'alésage étagé, un épaulement 11 constitue une butée à l'enfoncement de l'extrémité de conduite dans le raccord. Dans un mode particulier de réalisation, la portion de guidage 9 peut être légèrement conique, la petite base étant tournée vers la portion étagée 10 pour créer une légère compression de la paroi de l'extrémité de conduite lorsqu'elle pénètre dans cette portion de guidage.

Les moyens de connexion 6 comprennent de façon connue en soi un insert en deux parties 12, 13 introduites et maintenues à force dans le corps selon une technique connue. La partie 12 est adjacente à l'extrémité libre 3' de la partie femelle 3 et la partie 13 adjacente à la portion 7 est en butée contre l'épaulement 14 séparant les deux portions 5, 7 de l'alésage étagé 4 et s'étend en saillie par rapport à ladite portion 7 pour former une butée axiale pour le joint d'étanchéité 8.

Les deux parties 12, 13 définissent entre elles une gorge 15 qui constitue un logement pour une rondelle 16 pourvue de dents d'accrochage et de retenue de l'extrémité de conduite.

Un poussoir tubulaire de déconnexion 17 est monté pour coulisser dans la partie 12 de l'insert entre une position enfoncée dans laquelle le poussoir a une extrémité 17.1 venant soulever les dents de la rondelle et une position en retrait dans laquelle ladite extrémité 17.1 est espacée des dents (position représentée à la figure 1). L'extrémité opposée 17.2 du poussoir 17 s'étend en saillie de l'extrémité libre 3' de la partie femelle 3.

Le dispositif de raccordement comporte des moyens de protection qui comprennent un manchon généralement désigné en 18 comportant de façon axialement consécutive une partie 19 de liaison au corps 1 et une partie de guidage 20 de l'extrémité de conduite. La partie de liaison 19 et la partie de guidage 20 sont ici reliée l'une à l'autre par une partie tronconique. Le manchon 18 est réalisé par injection en une matière thermoplastique relativement rigide par rapport à la conduite.

La partie de liaison 19 a un diamètre interne supérieur à un diamètre externe de la partie femelle 3 du corps 1 et comprend une bague 21, également de diamètre interne supérieur au diamètre externe de la partie femelle 3 montée dans un logement 22 ménagé intérieurement dans la partie de liaison 19 pour coulisser radialement entre une position verrouillée (représentée à la figure 1) dans laquelle elle est excentrée par rapport à l'axe central de la partie de liaison 19 et une position déverrouillée dans laquelle la bague 21 est sensiblement coaxiale à la partie de liaison 19. En position verrouillée, la bague 21 présente ainsi une portion interne 23 s'étendant en saillie dans la partie de liaison 19. La portion interne 23 de la bague 21 a une surface biseautée à l'opposé de la partie de guidage 20 et est destinée à être reçue dans une gorge externe 24 de la partie femelle 3 du corps 1. La bague 21 est rappelée dans sa position verrouillée par des pattes élastiques 25 recourbées ayant une extrémité solidaire du pourtour externe de la bague 21 et une extrémité opposée libre en appui contre le fond du logement 22. En position verrouillée, la bague 21 présente d'un côté opposé à la portion interne 23 une portion externe de manoeuvre 26 en saillie à l'extérieur de la partie femelle 3 par une ouverture 27 par laquelle le logement 22 débouche sur la surface externe de la partie femelle 3.

Une encoche 28 est ménagée dans l'extrémité libre de la partie de liaison 19 pour recevoir un ergot 29 solidaire de la partie femelle 3 du corps 1 pour former une butée en rotation.

La partie de guidage 20 a un diamètre interne sensiblement égal au diamètre externe de l'extrémité de conduite et s'étend à une distance de la bague 21 supérieure à la distance séparant la gorge 24 de l'extrémité 17.2 du poussoir 17 en position en retrait.

La partie de guidage 20 est prolongée par une partie 30 de soutien de l'extrémité de conduite. Cette partie de soutien 30 comporte une paroi cylindrique 31 qui délimite un diamètre interne sensiblement égal au diamètre externe de l'extrémité de conduite et est traversée par une fente 32 s'étendant hélicoïdalement le long de la partie de soutien 30 et conférant à celle-ci une relative flexibilité.

Préalablement à la mise en place du manchon 18 sur le corps 1, le manchon 18 est enfilé sur l'extrémité de conduite en introduisant celle-ci dans la partie de soutien 30 du manchon.

L'extrémité de conduite est ensuite connectée au corps de manière connue en introduisant celle-ci dans la partie femelle 3 jusqu'à venir en butée de l'épaulement 11.

La partie de liaison 19 du manchon 18 est alors ramenée sur la partie femelle 3. Au cours de ce mouvement, la surface biseautée de la portion interne 23 de la bague 21 arrive en contact avec l'extrémité 3' et forme une rampe pour réaligner l'axe de la bague 21 et l'axe de la partie de liaison 19 qui est confondu avec celui de la partie femelle 3. La bague 21 peut alors se déplacer vers sa position déverrouillée à l'encontre des pattes élastiques 25 jusqu'à ce que la bague 21 arrive en regard de la gorge 24. Les pattes 25 se détendent alors et amènent la bague 21 dans sa position verrouillée. La portion interne 23 s'étend alors dans la gorge 24 dont le flanc adjacent à la partie mâle 2 constitue une butée à l'enfoncement de la partie de liaison 19 et le flanc adjacent à l'extrémité 3' constitue une butée à l'extraction de la partie de liaison 19.

La partie de liaison 19 sera orientée par rapport au raccord 1 de façon que l'ergot 29 soit reçu dans l'encoche 28 et immobilise en rotation la partie de liaison 19 et le raccord 1.

Une fois le manchon 18 monté sur la partie femelle 3 du raccord 1, l'extrémité de la partie de liaison 19 solidaire de la partie de guidage 20 s'étend au-delà de l'extrémité d'actionnement 17.2 du poussoir 17. Ainsi, le manchon forme un capot de protection autour de l'extrémité d'actionnement du poussoir de déconnexion et empêche un enfoncement accidentel du poussoir. De plus, la partie de guidage 20 s'oppose à la flexion de la portion de l'extrémité de conduite s'étendant entre la partie femelle 3 et la partie de guidage 20, tandis que la partie de soutien 30 autorise une flexion limitée de la portion de la conduite qu'elle reçoit (c'est-à-dire que la partie de maintien tend à raidir cette portion). En outre, la partie de guidage 20 s'oppose à une déformation transversale de la portion de l'extrémité de conduite s'étendant entre la partie femelle 3 et la partie de guidage 20.

On remarquera qu'il est également possible de monter le manchon 18 sur la partie femelle 3 puis seulement après d'introduire l'extrémité de conduite dans le manchon 18 et la partie femelle 3.

Le retrait du manchon est réalisé en enfonçant la bague 21 pour dégager la portion interne 23 de la gorge 24 puis en tirant sur le manchon. L'extrémité 17.2 du poussoir 17 est alors accessible de sorte que le poussoir 17 peut être enfoncé pour que l'extrémité 17.1 écarte de la conduite les dents de la rondelle 16 libérant ainsi l'extrémité de conduite qui peut être tirée hors de la partie femelle 3.

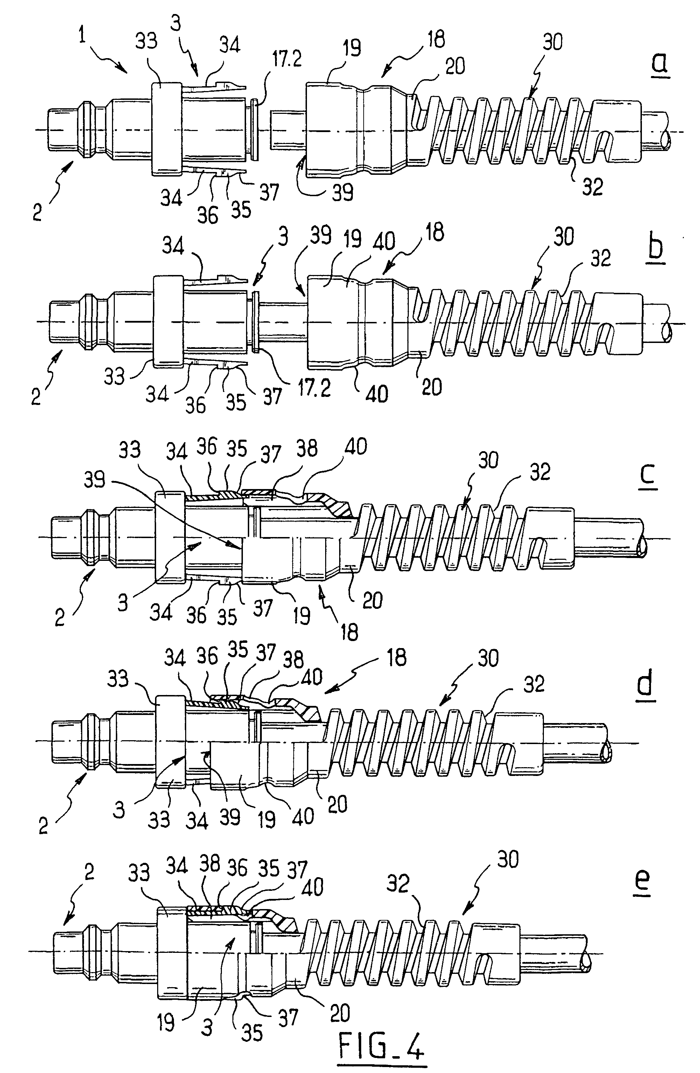

Les éléments identiques ou analogues à ceux précédemment décrits porteront une référence numérique identique dans la description qui suit de la variante de réalisation des figures 4a à e.

Dans cette variante, les modifications concernent principalement le mode d'attelage de la partie de liaison 19 au corps 1.

Un épaulement annulaire 33 s'étend entre la partie mâle 2 et la partie femelle 3 pour former une butée à l'enfoncement de la partie femelle 3 dans le manchon 18.

Deux lames élastiques 34 s'étendent parallèlement l'une à l'autre depuis l'épaulement 33 le long de la partie femelle 3 à l'extérieur de celle-ci. Les lames élastiques 34 sont disposées à l'opposé l'une de l'autre par rapport à la partie femelle 3.

Chaque lame élastique 34 possède une extrémité solidaire de l'épaulement 33 et une extrémité opposée libre pourvue à l'opposé du corps 1 d'un redan 35 possédant en regard de l'épaulement 33 une surface de butée 36 et à l'opposé une rampe 37. Chaque lame élastique 34 est déformable entre un état de repos dans lequel l'extrémité libre est écartée de la surface extérieure de la partie femelle 3 et un état déformé dans lequel l'extrémité libre est adjacente à la surface extérieure de la partie femelle 3.

La partie de liaison 19 présente intérieurement deux rainures longitudinales 38 pour recevoir à coulissement les lames élastiques 34. Chaque rainure 38 a une extrémité débouchant sur la face terminale 39 de l'extrémité libre de la partie de liaison 19 et une extrémité opposée débouchant dans un perçage 40 ménagé transversalement dans la partie de liaison 19 pour recevoir le redan 35.

L'extrémité de conduite est connectée comme précédemment à la partie femelle 3 après avoir enfilé le manchon 18 sur l'extrémité de conduite (figures 4a et 4b).

La partie de liaison 19 du manchon 18 est alors ramenée sur la partie femelle 3. Les rampes 37 des lames élastiques 34 à l'état de repos entrent en contact avec le bord des rainures 38 (figure 4c) au niveau de la face terminale 39 et en glissant sur ce bord amènent les lames élastiques 34 dans leur état déformé au fur et à mesure que la partie femelle 3 pénètre dans la partie de liaison 19 (figure 4d).

La coopération du redan 35 avec le fond de la rainure 38 maintient la lame élastique 34 dans son état déformé pendant la poursuite du mouvement d'introduction de la partie femelle 3 dans le manchon 18.

Lorsque la face terminale 39 arrive en butée contre l'épaulement 33, les redans 35 s'étendent en regard des perçages 40 de sorte que les lames élastiques 34 reviennent élastiquement vers leur état de repos. Les redans 35 sont alors engagés dans les perçages 40 et la surface de butée 36 s'oppose à l'extraction du manchon 18 tandis que les lames élastiques 34 et les redans 35 s'opposent à la rotation du manchon 18 par rapport au corps 1.

Le démontage du manchon 18 est réalisé en amenant les lames élastiques 34 dans leur état déformé par l'exercice d'une pression sur les redans 35 au travers des perçages 40 tout en exerçant un effort d'extraction sur le manchon 18.

Bien entendu, l'invention n'est pas limitée au mode de réalisation décrit et on peut y apporter des variantes de réalisation sans sortir du cadre de l'invention tel que défini par les revendications.

En particulier, la partie de soutien peut également être réalisée en un matériau moins rigide que celui utilisé pour le reste du manchon.

En outre, la partie de liaison peut être fixée à demeure sur le raccord (le poussoir de déconnexion du raccord étant alors accessible au travers d'une ouverture ménagée dans le manchon) ou la partie de liaison peut être associée au raccord par des moyens de fixation démontables. Les moyens d'attelage peuvent également avoir une structure différente de ceux décrits, résultant par exemple d'une inversion cinématique de ceux-ci.

## Revendications

1. Dispositif de raccordement d'une extrémité de conduite à un organe, le dispositif comprenant un corps pourvu d'un canal interne débouchant dans un chambrage comportant des moyens de connexion instantanée de l'extrémité de conduite à ce canal, les moyens de connexion instantanée comportant une rondelle à dents disposée dans le chambrage et étant associés à un poussoir tubulaire de déconnexion qui est monté pour coulisser dans le chambrage et possède une extrémité de manoeuvre en saillie à l'extérieur du corps et une extrémité opposée de soulèvement des dents, **caractérisé en ce que** le dispositif comprend un manchon (18) de protection de la connexion, qui comporte de façon axialement consécutive une partie (19) de liaison au corps s'étendant axialement en saillie du corps autour de l'extrémité de manoeuvre du poussoir, une partie (20) de guidage de la conduite qui est solidaire de la partie de liaison d'un côté opposé au corps et s'étend au-delà de l'extrémité de manoeuvre du poussoir coaxialement au canal interne, et une partie tubulaire (30) de soutien de la conduite prolongeant la partie de guidage (20) à l'opposé de la partie de liaison (19).

2. Dispositif de raccordement selon la revendication 1, **caractérisé en ce que** la partie de liaison (19) comprend des moyens (21) de son attelage amovible au corps (1).

3. Dispositif de raccordement selon la revendication 2, **caractérisé en ce que** les moyens d'attelage comprennent une bague (21) montée pour coulisser transversalement dans la partie de liaison (19) entre une position verrouillée dans laquelle la bague est rappelée élastiquement et est décentrée par rapport à l'axe de la partie de liaison pour présenter une partie (23) en saillie dans le manchon destinée à coopérer avec un relief correspondant du corps et une position déverrouillée dans laquelle la bague est coaxiale à la partie de liaison pour dégager le relief.

4. Dispositif de raccordement selon la revendication 3, **caractérisé en ce que** le rappel élastique est réalisé au moyen de pattes (25) élastiquement déformables ayant une extrémité solidaire de la surface externe de la bague (21) et une extrémité opposée libre en appui sur une paroi de la partie de liaison (19) du manchon (18).

5. Dispositif de raccordement selon la revendication 4, **caractérisé en ce que** les pattes (25) ont une forme recourbée.

6. Dispositif de raccordement selon la revendication 2, **caractérisé en ce que** les moyens d'attelage comprennent au moins une lame élastique (34) qui est déformable entre un premier étant dans lequel elle est rappelée élastiquement et un deuxième état, la lame élastique s'étendant longitudinalement à l'extérieur du corps (1) et ayant une extrémité solidaire du corps et une extrémité opposée libre pourvue d'un redan (35) pour être introduite dans le manchon (18) et coopérer avec un perçage (40) ménagé transversalement dans le manchon (18) lorsque ce dernier est attelé au corps (1), de telle manière que, la lame élastique étant dans son premier état, l'extrémité libre est écartée du corps et le redan est en saillie dans le perçage et, la lame élastique étant dans son deuxième état, l'extrémité libre est rapprochée du corps et le redan est dégagé du perçage.

7. Dispositif de raccordement selon la revendication 6, **caractérisé en ce que** les moyens d'attelage comprennent deux lames élastiques (34) s'étendant parallèlement le long du corps (1) à l'opposé l'une de l'autre pour coopérer avec deux perçages (40) correspondants du manchon (18).

8. Dispositif de raccordement selon la revendication 1, **caractérisé en ce que** la partie de soutien (30) a une paroi (31) traversée par une fente (32) s'étendant hélicoïdalement le long de la partie de soutien.

9. Dispositif de raccordement selon l'une quelconque des revendications précédentes, **caractérisé en ce que** le moyens de protection comprennent un élément (28) de blocage en rotation de la partie de liaison (19) par rapport au corps (1) autour de l'axe longitudinal du canal.

10. Dispositif de raccordement selon la revendication 9, **caractérisé en ce que** l'élément de blocage comprend une encoche (28) pour coopérer avec un ergot (29) en saillie extérieure sur le corps (1).

## Patentansprüche

1. Vorrichtung zum Verbinden eines Leitungsendes mit einem Element, umfassend einen Körper, der einen inneren Kanal hat, der in eine Kammer mündet, die Mittel zur schnellen Kopplung des Leitungsendes an den Kanal umfasst, wobei die Schnellkopplungsmittel eine in der Kammer angeordnete Zahnscheibe umfassen und mit einem rohrförmigen Trennstößel verbunden sind, der in der Kammer verschiebbar montiert ist und ein von der Außenseite des Körpers abstehendes Betätigungsende und ein entgegengesetztes Ende zum Anheben von Zähnen hat, **dadurch gekennzeichnet, dass** die Vorrichtung eine Muffe (18) zum Schutz der Kopplung hat, die axial aufeinanderfolgend einen zur Verbindung mit dem Körper bestimmten Teil (19), der axial von dem Körper hervorsteht und das Betätigungsende des Stößels umgibt, einen Teil (20) zum Führen der Leitung, der auf der dem Körper entgegengesetzten Seite fest mit dem Verbindungsteil verbunden ist und sich jenseits des Betätigungsendes des Stößels koaxial zu dem inneren Kanal erstreckt, und einen rohrförmigen Teil (30) zum Stützen der Leitung umfasst, der sich auf der dem Verbindungsteil (19) entgegengesetzten Seite dem Führungsteil (20) anschließt.

2. Verbindungsvorrichtung nach Anspruch 1, **dadurch gekennzeichnet, dass** der Verbindungsteil (19) Mittel (21) zu seiner lösbaren Ankopplung an dem Körper (1) umfasst.

3. Verbindungsvorrichtung nach Anspruch 2, **dadurch gekennzeichnet, dass** die Ankopplungsmittel einen Ring (21) umfassen, der in dem Verbindungsteil (19) zwischen einer verriegelten Stellung, in der der Ring elastisch zurückgesetzt und gegenüber der Achse des Verbindungsteils dezentriert ist, um einen in die Muffe abstehenden Teil (23) zu bilden, der dazu bestimmt ist, mit einem entsprechenden Relief des Körpers zusammenzuwirken, und einer entriegelten Stellung quer verschiebbar ist, in der der Ring koaxial mit dem Verbindungsteil ist, um das Relief freizusetzen.

4. Verbindungsvorrichtung nach Anspruch 3, **dadurch gekennzeichnet, dass** die elastische Zurücksetzung mittels elastisch verformbarer Füße (25) erfolgt, die ein mit der Außenfläche der Scheibe (21) fest verbundenes Ende und ein entgegengesetztes freies Ende haben, das sich auf einer Wand des Verbindungsteils der Muffe (18) abstützt.

5. Verbindungsvorrichtung nach Anspruch 4, **dadurch gekennzeichnet, dass** die Füße (25) eine gebogene Form haben.

6. Verbindungsvorrichtung nach Anspruch 2, **dadurch gekennzeichnet, dass** die Ankopplungsmittel mindestens eine elastische Lamelle (34) umfassen, die zwischen einem ersten Zustand, in dem sie elastisch zurückgesetzt ist, und einem zweiten Zustand, in dem sich die elastische Lamelle längs der Außenfläche des Körpers (1) erstreckt, verformbar ist und die ein mit dem Körper fest verbundenes Ende und ein entgegengesetztes freies Ende hat, das mit einem Absatz (35) versehen ist, der dazu bestimmt ist, in die Muffe (18) einzutreten und mit einer Bohrung (40), die quer in der Muffe (18) ausgebildet ist, während der Ankopplung der Muffe (18) an dem Körper (1) in der Weise zusammenzuwirken, dass im ersten Zustand der elastischen Lamelle das freie Ende von dem Körper absteht und der Absatz in die Bohrung hineinsteht, während im zweiten Zustand der elastischen Lamelle das freie Ende an dem Körper anliegt und der Absatz von der Bohrung befreit ist.

7. Verbindungsvorrichtung nach Anspruch 6, **dadurch gekennzeichnet, dass** die Ankopplungsmittel zwei elastische Lamellen (34) umfasst, die sich parallel zueinander längs des Körpers (1) erstrecken und mit zwei ihnen zugeordneten Bohrungen (40) der Muffe (18) zusammenwirken.

8. Verbindungsvorrichtung nach Anspruch 1, **dadurch gekennzeichnet, dass** der Stützteil (30) eine Wand (31) hat, die von einem Schlitz (32) durchsetzt ist, der sich schraubenförmig längs des Stützteils erstreckt.

9. Verbindungsvorrichtung nach einem der vorhergehenden Ansprüche, **dadurch gekennzeichnet, dass** die Schutzmittet ein Element (28) umfassen, um eine Drehung des Verbindungsteils (19) relativ zu dem Körper (1) um die Längsachse des Kanals zu blockieren.

10. Verbindungsvorrichtung nach Anspruch 9, **dadurch gekennzeichnet, dass** das Blockierelement eine Kerbe (28) umfasst, die mit einer Nase (29) zusammenwirkt, die außen an dem Körper (1) absteht.

## Claims

1. A device for coupling an end of a hose to a member, the device comprising a body provided with an internal channel opening out into a chamber having quick-connection means for connecting the end of the hose to the channel, the quick-connection means comprising a washer with teeth disposed in the chamber and associated with a tubular disconnection pusher which is mounted to slide inside the chamber and which possesses a drive end projecting outside the body, and an opposite end for lifting the teeth, the device being **characterized in that** it comprises a sleeve (18) for protecting the connection, which sleeve comprises in axially consecutive manner: a portion (19) for connection to the body extending axially so as to project from the body around the drive end of the pusher; a hose guide portion (20) which is secured to the connection portion via an end opposite from the body and which extends beyond the drive end of the pusher coaxially with the internal channel; and a tubular portion (30) for supporting the hose, extending the guide portion (20) away from the connection portion (19).

2. A coupling device according to claim 1, **characterized in that** the connection portion (19) has fastening means (21) for releasably fastening it to the body (1).

3. A coupling device according to claim 2, **characterized in that** the fastening means comprise a ring (21) mounted to slide transversely in the connection portion (19) between a locked position in which the ring is biased resiliently so as to be off-center relative to the axis of the connection portion, thereby presenting a portion (23) projecting into the sleeve to co-operate with a corresponding portion in relief on the body, and an unlocked position in which the ring is coaxial with the connection portion so as to disengage the portion in relief.

4. A coupling device according to claim 3, **characterized in that** the resilient bias is performed by means of elastically deformable tabs (25) each having one end secured to the outside surface of the ring (21) and an opposite end that is free, bearing against a wall of the connection portion (19) of the sleeve (18).

5. A coupling device according to claim 4, **characterized in that** the tabs (25) are curved in shape.

6. A coupling device according to claim 2, **characterized in that** the fastening means comprise at least one spring blade (34) which is deformable between a first stage in which it is biased resiliently and a second stage, the spring blade extending longitudinally outside the body (1) and having one end secured to the body and an opposite end that is free provided with a catch (35) for being inserted into the sleeve (18) and for co-operating, when the sleeve is fastened to the body (1), with a hole (40) formed transversely through the sleeve (18) in such a manner that when the spring blade is in its first state its free end is moved away from the body and the catch projects into the hole, and when the spring blade is in its second state, the free end is moved towards the body and the catch is disengaged from the hole.

7. A coupling device according to claim 6, **characterized in that** the fastening means comprise two spring blades (34) extending parallel along the body (1) on opposite sides to each other so as to co-operate with two corresponding holes (40) of the sleeve (18).

8. A coupling device according to claim 1, **characterized in that** the support portion (30) has a wall (31) pierced by a slot (32) extending helically along the support portion.

9. A coupling device according to any preceding claim, **characterized in that** the protection means include an element (28) for preventing the connection portion (19) from turning relative to the body (1) about the longitudinal axis of the channel.

10. A coupling device according to claim 9, **characterized in that** the element for preventing rotation comprises a notch (28) for co-operating with a stud (29) projecting outwards from the body (1).
